Europäisches Patentamt

European Patent Office

Office européen des brevets

(11) Publication number: **0 192 735**
**B1**

## EUROPEAN PATENT SPECIFICATION

(45) Date of publication of patent specification: **08.03.89**

(21) Application number: **85904518.9**

(22) Date of filing: **26.08.85**

(86) International application number:
**PCT/US85/01625**

(87) International publication number:
**WO 86/01610 13.03.86 Gazette 86/06**

(51) Int. Cl.⁴: **G 02 B 6/38**

(54) A CONNECTOR FOR AN OPTICAL FIBER.

(30) Priority: **31.08.84 US 645976**

(43) Date of publication of application:
**03.09.86 Bulletin 86/36**

(45) Publication of the grant of the patent:
**08.03.89 Bulletin 89/10**

(84) Designated Contracting States:
**BE DE FR GB IT NL**

(56) References cited:
**GB-A-2 040 062**
**US-A-3 946 467**

**Patent Abstracts of Japan, vol.2, no.4. 12
January 1978 & JP-A-52119237**

(73) Proprietor: **AMP INCORPORATED**
**470 Friendship Road P.O. Box 3608**
**Harrisburg Pennsylvania 17105 (US)**

(72) Inventor: **HUBER, John, Henry**
**6131 Bluestone Avenue**
**Harrisburg, PA 17112 (US)**

(74) Representative: **Gray, Robin Oliver et al**
**BARON & WARREN 18 South End Kensington**
**London W8 5BU (GB)**

Courier Press, Leamington Spa, England.

## Description

The invention concerns a connector for an optical fiber comprising a ferrule for surrounding the fiber end portion, a fiber clamp of resiliently compressible material for surrounding the fiber end, and a tubular body for connecting the fibre to the ferrule, one end of the body having a tubular portion divided into axially extending fingers capable of being directed radially inwards for gripping a buffer jacket surrounding the fiber.

It is known from U.S. Patent 3,946,467 to provide a connector for an optical fiber, wherein the connector has a tubular portion for surrounding the fiber, the tubular portion is axially split to provide a finger, and a sleeve for surrounding the tubular portion and for sliding axially along the tubular portion to engage the finger and deflect the finger into frictional engagement with the fiber, thereby to grip the fiber.

It is known from U.S. Patent 4,190,317 to provide a connector for an optical fiber, wherein the connector has a tubular portion for surrounding the fiber, an enlarged counterbore in an end of the tubular portion, and a conical and resilient insert member for surrounding the fiber, and the insert member is compressed radially when inserted in the counterbore, thereby to grip the fiber.

It is known from GB—A—2 040 062 to provide a connector for an optical fiber comprising a ferrule for surrounding the fiber end, a fiber clamp of resiliently compressible material for surrounding the fiber, and a tubular body for connecting the fiber to the ferrule, one end of the body having a tubular portion divided into axially extending fingers capable of being directed radially inwards for gripping a buffer jacket surrounding the fiber.

It is an object to provide an improved connector having the features acknowledged to be known from GB—A—2 040 062.

A connector for an optical fiber according to the present invention is characterised in that, when assembled, an outer surface portion of the fiber clamp in the ferrule is axially urged by ends of the fingers against an internal surface of the ferrule, the surfaces cooperating the deform the clamp radially inwardly so as to grip the fiber, and in addition, the outer longitudinal surfaces of the fingers in the ferrule cooperate with the internal bore surface of the ferrule to be compressed radially inwardly against the buffer jacket.

An advantage of the invention is that an optical fiber is engaged by fingers that urge an elastomeric clamp against an internal surface of a ferrule that surrounds an end of an optical fiber to align the same, and the internal surface urges the fingers to grip a jacket portion of the fiber and to compress the clamp radially to grip the fiber and the internal surface further compresses the clamp radially to grip the fiber. Thereby, the fiber is gripped more securely than by fingers of a tubular body urged radially by a ring or by an elastomeric clamp compressed within a counterbore.

The invention will be described by way of example with reference to the accompanying drawings in which:

FIGURE 1 is a perspective view of an optical fiber connector of the present invention;

FIGURE 2 is an exploded perspective view of the present invention;

FIGURE 3 is a view, partially in section and partially exploded, of the present invention;

FIGURE 4 is a section view of the invention assembled with an optical fiber cable; and

FIGURE 5 is a fragmentary sectional view of a one-piece ferrule of the present invention.

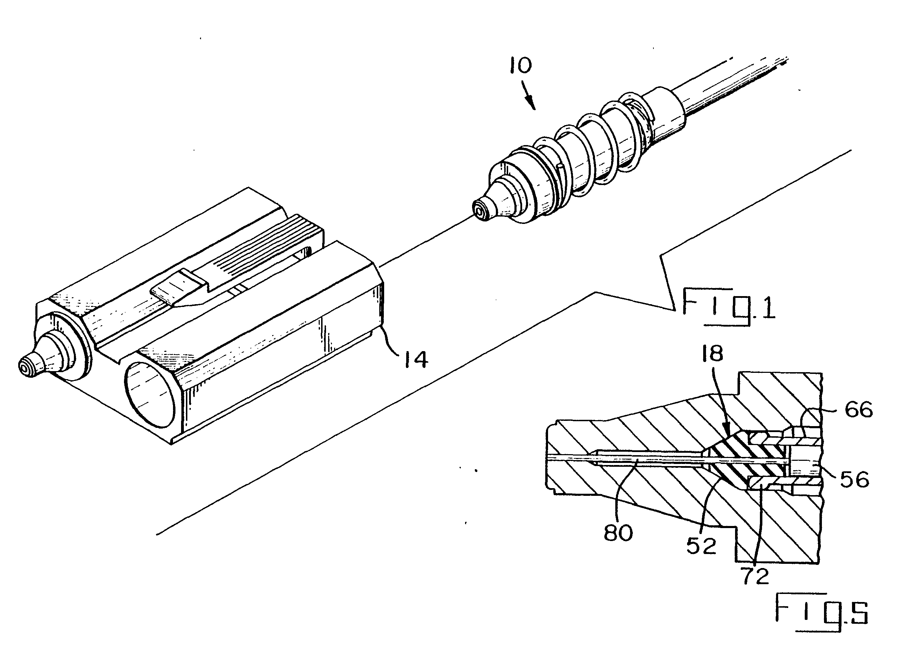

A connector of the invention 10 is shown in Figure 1 assembled with an optical fiber cable 12 and aligned to be received in a connector member 14 of the type disclosed in U.S. Patent No. 4,167,303.

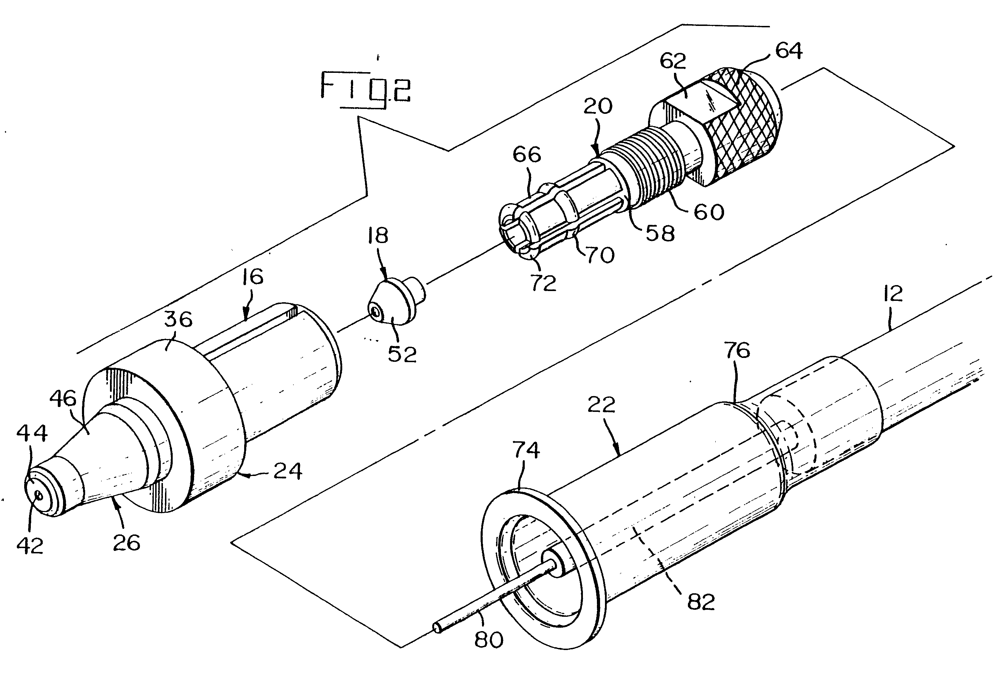

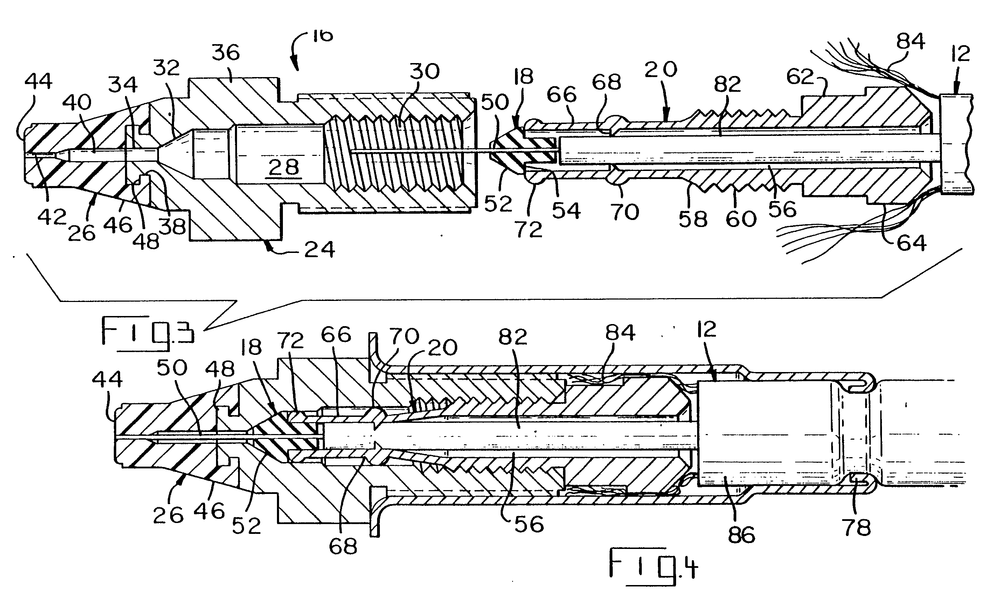

The details of the connector 10 are shown in Figures 2 and 3. The connector 10 includes a ferrule 16, a clamp 18, a body 20, and an outer shell 22. The ferrule 16 is a two-part member having a body portion 24 and a nose end portion 26 of resilient material such as plastic. The body portion 24 is preferably made of rigid metal, such as brass, and has an axial passage with an internal surface 28. The passage further has an internally threaded entry portion 30 and a portion with a truncated conical surface portion 32 of the internal surface 28, an exit passage portion 34. The outside of the body 24 has an external flange 36 and an annular recess 38. The resilient nose end portion 26 has an axial bore 40 aligned with the bore portion 34 and a narrow exit bore portion 42 at a front mating end 44. The nose end portion 26 has an outer tapered conical portion 46 and an inwardly directed annular flange 48 which engages the annular recess 38 to secure the nose end portion 26 on the body 24.

The clamp 18 is preferably made of a resilient elastomeric material and has an axial bore 50 and an outer profile including a tapered conical portion 52 and an annular shoulder 54. The profile of the conical portion 52 is such that it will interface with the conical surface portion 32 of the body 24.

The body 20 is an elongated metal member having an axial passage 56 extending through the body. Body portion 58 has external threads 60 intermediate an enlarged head portion 62, which has a knurled outer surface 64. Body 20 includes a tubular portion divided into a plurality of cantilever fingers 66, which have inwardly projecting, buffer clamping teeth 68 and outwardly projecting, raised clamping rings 70, 72.

The outer shell 22 is a generally cylindrical member of soft metal having an external flange 74 at one end, a stepped diameter profile 76 intermediate its ends, and an inwardly turned, radial flange 78 at a second end.

The cable 12 includes an optical fiber 80 enclosed within a buffer jacket 82 and strength members 84, such as Kevlar, and an outer jacketing 86.

The cable 12 is prepared in known fashion to expose a section of the buffer jacket 82 and the fiber 80. The fiber 80 and the buffer jacket 82 are passed through the shell 22 and the passage 56 through the body 20. The fiber 80 is passed through the bore 50 of the clamp 18. Cable 12, clamp 18 and body 20 are assembled in the passage 28 of the ferrule 16, with the fiber 80 passing through the bore portion 34 and the bore portions 40 and 42 to extend beyond the end 44 of the ferrule 16. The threads 60 are advanced along the threads 30 to drive the cable 12 forward until the clamp 18 engages and is compressed against the surface 32 which deforms the clamp radially to grip the fiber 80. The raised clamping rings 70, 72 engage the surface 28 of the passage which urges the fingers radially to compress the clamp 18 radially in turn to grip the fiber 80. The surface of the passage 28 further urges the fingers 66 radially to drive the clamping teeth 68 into the buffer 82. Thereby the cable 12 is securely gripped. The strength members 84 are located along the outside of the ferrule 16, and are covered by the outer shell 22 that is moved forward over the body 20 and a portion of the ferrule 16 until the flange 74 engages the flange 36. The outer shell 22 is radially deformed to engage the jacket 86 of the cable 12 as shown in Figure 4. Figures 4 and 5 show the radial compression of the clamp 18 by the ferrule 16. The radial compression of the clamp 18 on the fiber 80 centers the fiber 18 with respect to the axis of the ferrule. Figure 5 further shows the ferrule alternatively as a one-piece member.

It will be appreciated that the present invention can be utilized in other configurations and that the exterior profile of the ferrule is not critical to the present invention. The present invention is suitable for use with simplex, duplex or multiple fiber connectors. The present invention also may be used in substantially any environment and is suitable for making a repair of an optical fiber.

## Claims

1. A connector for an optical fiber (80) comprises a ferrule (16) for surrounding the fiber end portion, a fiber clamp (18) of resiliently compressible material for surrounding the fiber end, and a tubular body (20) for connecting the fiber to the ferrule (16), one end of the body (20) having a tubular portion divided into axially extending fingers (66) capable of being directed radially inwards for gripping a buffer jacket (82) surrounding the fiber (80), characterized in that, when assembled, an outer surface portion (52) of the fiber clamp (18) in the ferrule (16) is axially urged by ends of the fingers (66) against an internal surface (28) of the ferrule (16), the surfaces (52, 28) cooperating to deform the clamp (18) radially inwardly so as to grip the fiber (80), and in addition, the outer longitudinal surfaces of the fingers (66) in the ferrule (16) cooperate with the internal bore surface (28) of the ferrule (16) to be compressed radially inwardly against the buffer jacket (82).

2. A connector for an optical fiber as recited in claim 1, wherein the fiber clamp (18) is held by the ends of the fingers (66) and the outer surface portion is conical.

3. A connector for an optical fiber as recited in claim 1, wherein the internal surface (28) includes a truncated conical portion (32).

4. A connector for an optical fiber as recited in claim 1, wherein the clamp (18) is held by the ends of fingers (66) and the fingers (66) also cooperate with the ferrule's internal surface (28) to compress the clamp (18) radially so as to grip the fiber (80).

5. A connector for an optical fiber as recited in claim 1, wherein teeth (68) on the internal surface of the fingers (66) project radially towards the buffer jacket (82).

6. A connector for an optical fiber as recited in claim 1, wherein the ferrule (16) has a rigid portion containing the clamp (18) and the fingers (66), and a resilient end portion (6) encircling an end of the fiber (80).

7. A connector for an optical fiber as recited in claim 1, wherein the fiber clamp (18) is held by the ends of the fingers (66), radially inwardly projecting teeth (68) are on the inner surface of the fingers (66), and the fingers (66) cooperate with the internal bore surface (28) of the ferrule to engage the teeth (68) against the buffer jacket (82).

## Patentansprüche

1. Verbinder für eine optische Faser (80), mit einer Zwinge (16) zum Umschließen des Faserendbereichs, einer Faserklemme (18) aus federnd nachgiebig zusammendrückbarem Material zum Umschließen des Faserendes, und einem röhrenförmigen Körper (20) zum Verbinden der Faser mit der Zwinge (16), wobei ein Ende des Körpers (20) einen röhrenförmigen Bereich aufweist, der in sich axial erstreckende Finger (66) unterteilt ist, die sich zum Ergreifen eines die Faser (80) umgebenden Puffermantels (82) radial nach innen richten lassen, dadurch gekennzeichnet, daß im zusammengebauten Zustand ein Außenflächenbereich (52) der Faserklemme (18) in der Zwinge (16) durch Enden der Finger (66) axial gegen eine Innenfläche (28) der Zwinge (16) gedrückt ist, die Flächen (52, 28) zum Verformen der Klemme (18) radial nach innen zum Ergreifen der Faser (80) zusammenwirken, und außerdem die äußeren länglichen Oberflächen der Finger (66) in der Zwinge (16) mit der Innenbohrungsfläche (28) der Zwinge (16) derart zusammenwirken, daß sie radial nach innen gegen den Puffermantel (82) gepreßt sind.

2. Verbinder für eine optische Faser, wie er im Anspruch 1 angegeben ist, dadurch gekennzeichnet, daß die Faserklemme (18) von den Enden der Finger (66) gehalten wird und der Außenflächenbereich konisch ausgebildet ist.

3. Verbinder für eine optische Faser, wie er im Anspruch 1 angegeben ist, dadurch gekennzeichnet, daß die Innenfläche (28) einen kegelstumpfförmigen Bereich (32) beinhaltet.

4. Verbinder für eine optische Faser, wie er im Anspruch 1 angegeben ist, dadurch gekennzeichnet, daß die Klemme (18) von den Enden der Finger (66) gehalten wird und die Finger (66) außerdem derart mit der Zwingeninnenfläche (28) zusammenwirken, daß die Klemme (18) zum Ergreifen der Faser (80) radial zusammengedrückt wird.

5. Verbinder für eine optische Faser, wie er im Anspruch 1 angegeben ist, dadurch gekennzeichnet, daß an der Innenfläche der Finger (66) vorgesehene Zähne (68) radial nach innen in Richtung auf den Puffermantel (82) wegragen.

6. Verbinder für eine optische Faser, wie er im Anspruch 1 angegeben ist, dadurch gekennzeichnet, daß die Zwinge (16) einen die Klemme (18) und die Finger (66) enthaltenden, starren Bereich sowie einen ein Ende der Faser (80) umgebenden, federnd nachgiebigen Endbereich (6) aufweist.

7. Verbinder für eine optische Faser, wie er im Anspruch 1 angegeben ist, dadurch gekennzeichnet, daß die Faserklemme (18) von den Enden der Finger (66) gehalten wird, an der Innenfläche der Finger (66) radial nach innen wegragende Zähne (68) vorhanden sind und die Finger (66) derart mit der Innenbohrungsfläche (28) der Zwinge zusammenwirken, daß die Zähne (68) mit dem Puffermantel (82) in Eingriff stehen.

## Revendications

1. Connecteur pour une fibre optique (80) qui comprend une virole (16) destinée à entourer la partie d'extrémité de la fibre, un serre-fibre (18) en matière élastiquement compressible destiné à entourer l'extrémité de la fibre, et un corps tubulaire (20) destiné à relier la fiber à la virole (16), une extrémité du corps (20) comportant une partie tubulaire divisée en des mors axiaux (66) propres à être déviés radialement vers l'intérieur pour agripper une gaine de protection (82) entourant la fibre (80), caractérisé en ce que, après assemblage, une partie de surface externe (52) du serre-fibre (18) dans la virole (16) est sollicitée axialement par des extrémités des mors (66) contre une surface interne (28) de la virole (16), les surfaces (52, 28) coopérant pour déformer le serre-fibre (18) radialement vers l'intérieur de manière à agripper la fibre (80), et, en outre, les surfaces longitudinales externes des mors (66) dans la virole (16) coopèrent avec la surface (28) interne de l'alésage de la virole (16) afin d'assurer que les mors soient pressés radialement vers l'intérieur contre la gaine de protection (82).

2. Connecteur pour une fibre optique suivant la revendication 1, dans lequel le serre-fibre (18) est retenu par les extrémités des mors (66) et la partie de surface externe est conique.

3. Connecteur pour une fibre optique suivant la revendication 1, dans lequel la surface interne (28) comprend une partie tronconique (32).

4. Connecteur pour une fibre optique suivant la revendication 1, dans lequel le serre-fibre (18) est retenu par les extrémités des mors (66), et les mors (66) coopèrent également avec la surface interne (28) de la virole pour comprimer le serre-fibre (18) radialement de manière à agripper la fibre (80).

5. Connecteur pour une fibre optique suivant la revendication 1, dans lequel des dents (68) sur la surface interne des mors (66) s'étendent radialement vers la gaine de protection (82).

6. Connecteur pour une fibre optique suivant la revendication 1, dans lequel la virole (16) comporte une partie rigide contenant le serre-fibre (18) et les mors (66), et une partie d'extrémité élastique (26) encerclant une extrémité de la fibre (80).

7. Connecteur pour une fibre optique suivant la revendication 1, dans lequel le serre-fibre (18) est retenu par les extrémités des mors (66), des dents en saillie radialement vers l'intérieur (68) sont prévues sur la surface interne des mors (66) et les mors (66) coopèrent avec la surface interne (28) du passage de la virole pour engager les dents (68) contre la gaine de protection (82).

10

Fig.1

14

18

66

56

80

52

72

Fig.5

Fig.2

EP 0 192 735 B1

Fig. 3

Fig. 4